# FASCICULE DE BREVET EUROPEEN

(11) **EP 1 536 159 B1**
(45) Date de publication et mention de la délivrance du brevet: **05.01.2011**
(21) Numéro de dépôt: 04300679.0
(22) Date de dépôt: 14.10.2004
(51) Int. Cl.: F16H 7/12, H04N 1/10

(54) **Scanner à plat comportant une courroie et un dispositif intégré de tension de courroie**
Flachbettabtaster mit Riemen und Riemenspannvorrichtung
Flat bed scanner with belt and belt tensioning device

(30) Priorité: 25.11.2003 FR 0350913
(43) Date de publication de la demande: 01.06.2005
(73) Titulaire: SAGEMCOM DOCUMENTS SAS, 92500 Rueil Malmaison (FR)
(72) Inventeur: Siron, Daniel, 95800 Courdimanche (FR)
(74) Mandataire: Schmit, Christian Norbert Marie

(56) Documents cités:
- US-A- 1 513 473
- US-A- 6 004 236
- US-A- 6 033 330
- US-B1- 6 377 364
- PATENT ABSTRACTS OF JAPAN vol. 2002, no. 06, 4 juin 2002 (2002-06-04) & JP 2002 054702 A (RICOH CO LTD), 20 février 2002 (2002-02-20)

## Description

### DOMAINE TECHNIQUE DE L'INVENTION

La présente invention a pour objet un scanner à plat comportant une courroie et un dispositif intégré de tension de courroie.

Le domaine de l'invention est celui de la production de documents numériques. Plus particulièrement le domaine de l'invention est celui des scanners à plat. Encore plus particulièrement le domaine de l'invention est celui des scanners comportant un capteur mobile pour l'exploration du document dont il faut produire une version numérique, la mobilité du capteur étant le fait d'une courroie.

Un but de l'invention est de limiter le nombre de pièces à mettre en oeuvre pour réaliser un dispositif tenseur de courroie dans un scanner.

Un autre but de l'invention est de simplifier le montage d'un scanner comportant une courroie et un dispositif pour la tendre.

Dans l'état de la technique on connaît différentes solutions pour assurer la tension d'une courroie. De telles solutions sont décrites dans les documents DE 100 28 220 A1, US 1 1513 473, ou encore JP 2002-106654. De telles solutions ont en commun leur complexité de mise en oeuvre, en ce sens qu'elles réclament un grand nombre de pièces, en plus d'une poulie, pour assurer la tension d'une courroie engagée sur cette poulie. Ainsi, le document DE 100 28 220 A1 fait état d'une barre de fixation fixée à un châssis, d'un ressort lame (par ailleurs relativement complexe), et d'une fourche. Autant de pièces à assembler et dont il faut garantir le positionnement. Il s'agit donc de solutions difficiles à mettre en oeuvre, onéreuses et de plus non adaptées au domaine de l'invention.

Dans l'état de la technique, on connaît aussi une solution consistant à monter une poulie sur un chariot mobile, le chariot étant alors repousser par un ressort hélicoïdal. Le problème de cette solution est comme précédemment le nombre de pièces, et donc l'assemblage. Un autre problème de cette solution est que la force de rappel due au ressort s'applique sur le chariot et est donc décalée par rapport à la force de traction exercée par la poulie portée par le chariot. Cela créé un torseur qu'il faut prendre en compte lors de la conception et de la réalisation de l'appareil, ce qui complexifie le dispositif tenseur en même temps que cela le fragilise par les risques de blocage du chariot dus au torseur.

US 6 377 364 est considéré comme l'art antérieur le plus proche.

### DESCRIPTION GENERALE DE L'INVENTION

Dans l'invention on résout ces problèmes en intégrant, par moulage, le dispositif tenseur de courroie à la coque du scanner. Il n'y a ainsi plus de pièce à assembler qui soit spécifique au tenseur de courroie. La coque ainsi obtenue comporte alors un bras flexible dans un plan privilégié et rigide dans les autres plans. Le plan privilégié est celui dans lequel s'effectue le déplacement d'un chariot portant "l'oeil électronique" du scanner, il s'agit du plan horizontal. Le bras flexible a donc une forme assurant sa rigidité dans tous les plans non horizontaux. Le bras flexible comporte à l'une de ses extrémités un axe vertical pour y assujettir une poulie sur laquelle est engagée une courroie dont il faut assurer la tension. L'élasticité du bras flexible permet le maintient sous tension de la courroie.

Dans une variante le dispositif tenseur selon l'invention comporte un ressort en épingle, fixé via des moyens moulés dans la coque du scanner, permettant de contrer l'action de la courroie sur le bras flexible.

L'invention a donc pour objet un dispositif scanner à plat comportant une courroie d'entraînement pour déplacer un chariot mobile sur lequel est fixé un capteur optique du scanner explorant les documents à scanner, le scanner comportant aussi un dispositif tendeur de courroie, **caractérisé en ce que**:
- le dispositif tendeur comporte un bras flexible, moulé intégralement dans la coque du scanner,
- le bras flexible est flexible dans le plan horizontal dans lequel se déplace le chariot mobile, le moment d'inertie d'une section droite du bras par rapport à un axe horizontal étant supérieur au moment d'inertie de ladite section par rapport à une axe vertical,
- le bras flexible supporte, à son extrémité non solidaire de la coque, une poulie sur laquelle est engagée la courroie d'entraînement.

Avantageusement, l'invention est aussi **caractérisée en ce que** le bras flexible comporte, à son extrémité non solidaire de la coque, un plateau horizontal comportant un premier axe vertical apte à coopérer avec la poulie .

Avantageusement l'invention est aussi **caractérisée en ce que** le bras flexible, au repos, s'étend dans une direction perpendiculaire à une direction de déplacement du chariot mobile.

Avantageusement l'invention est aussi **caractérisée en ce que** par son élasticité, le bras flexible maintient la courroie d'entraînement en tension.

Avantageusement l'invention est aussi **caractérisée en ce que** la coque comporte des moyens, moulés dans la coque du scanner, pour la mise en place d'un ressort apte à coopérer avec la bras flexible pour la tension de la courroie d'entraînement.

Avantageusement l'invention est aussi **caractérisée en ce que** les moyens pour la mise en place du ressort comportent un deuxième axe vertical et une paroi verticale d'appui, le ressort étant mobile en rotation autour du deuxième axe et étant en compression entre la paroi d'appui et le bras flexible.

Avantageusement l'invention est aussi **caractérisée en ce que** le ressort est un ressort en épingle comportant une boucle en appui contre le bras flexible, des enroulements s'enroulant autour du deuxième axe, et des bras s'appuyant contre la paroi d'appui.

Avantageusement l'invention est aussi **caractérisée en ce que** la boucle du ressort comporte 2 branches parallèles s'étendant dans des plans horizontaux, les deux branches étant coudées de telle sorte que les branches sont tangentes au premier axe dans un plan perpendiculaire à une direction de déplacement du chariot.

Avantageusement l'invention est aussi **caractérisée en ce que** la boucle du ressort comporte 2 branches parallèles s'étendant dans des plans horizontaux, les deux branches s'appuyant sur le bras flexible, et passant de part et d'autre de la courroie engagée sur la poulie placée sur le premier axe, la courroie passant alors à travers la boucle du ressort.

Avantageusement l'invention est aussi caractérisée en ce le dispositif tendeur comporte un deuxième bras symétrique au premier par rapport au premier axe.

### BREVE DESCRIPTION DES FIGURES

- Figure 1 : une vue de dessus d'un dispositif selon l'invention.
- Figure 2a: une vue en perspective d'un bras flexible intégré à la coque d'un scanner.
- Figure 2b: une vue latérale de l'extrémité du bras flexible comportant l'axe sur lequel est assujettie une poulie.
- Figure 3: une illustration d'un ressort en épingle utilisable avec le dispositif tenseur selon l'invention.
- Figure 4: une illustration d'un dispositif tenseur selon l'invention avec ressort, poulie et courroie en place.

### DESCRIPTION DES FORMES DE REALISATION PREFEREES DE L'INVENTION

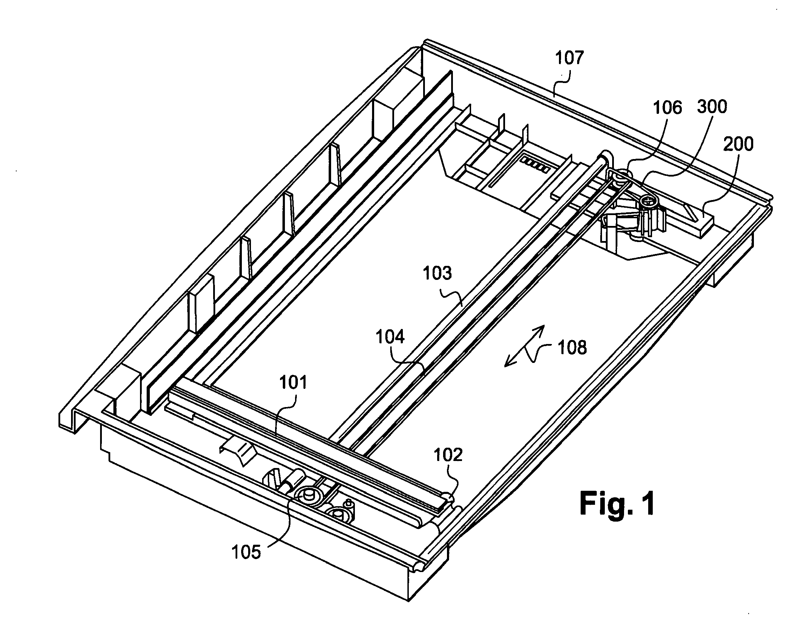

Un scanner selon l'invention est un scanner à plat. Un tel scanner 100 est illustré par la figure 1. Un tel scanner comporte typiquement une vitre sur laquelle est positionné le document dont il faut produire une copie numérique. Cette copie numérique est acquise via un capteur 101, aussi appelé oeil électronique, du scanner. Ce capteur est fixé sur un chariot 102 mobile qui parcourt, par translation le long d'un rail 103, la surface du document à scanner. Au cour de ce parcours, le capteur produit des signaux qui sont traités par l'électronique de la machine et convertis en signaux numériques.

C'est le rail 103 qui définit la direction 108 de translation du chariot 102. Dans la description on considère que le plan horizontal est celui de la vitre. Le chariot se déplace dans le plan horizontal. Le déplacement est obtenu via une courroie 104 à laquelle est fixé le chariot 102. La courroie 104 est engagée sur deux poulies 105 et 106. Une droite passant par les axes des poulies 105 et 106 et parallèle au rail 103. Les deux sections de la courroie 104 sont parallèles au rail 103. La poulie 105 coopère avec un moteur ce qui permet l'entraînement du chariot 102 le long du rail 103. La poulie 106 est quant à elle fixée à un dispositif 200 tendeur de courroie selon l'invention et moulé à la coque 107 du scanner 100.

Dans les figures, des références identiques désignent des éléments identiques.

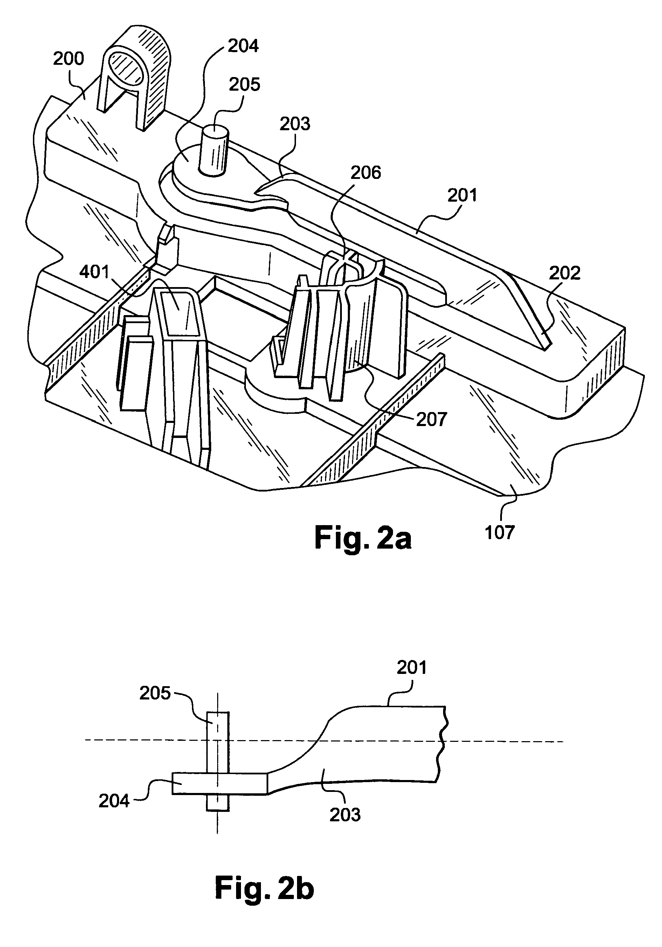

La figure 2 montre la coque 107 du scanner 101 dans laquelle est moulé le dispositif 200 de tension de la courroie 104. Le dispositif 200 comporte un bras 201 flexible. Le bras 201 a de préférence une section droite dont la dimension verticale est plus importante que la dimension horizontale de la dite section. Dans un exemple, cette section est rectangulaire, mais elle pourrait très bien être ovale, ou en I. Une section en I est une section rectangulaire comportant à ses extrémités de petits plateaux perpendiculaire au rectangle. On retrouve de telle section en I dans les poutrelles métalliques. Dans la pratique le bras peut prendre toute forme telle que le rapport, Ixx / Iyy, des moments d'inertie de sa section droite selon un axe horizontal et selon un axe vertical soit grand.

Dans le cas d'un bras de section rectangulaire, cette section a des dimension de l'ordre de 7 mm de hauteur pour 2 mm de largeur. Les moments d'inertie Ixx et Iyy de la section relatifs au centre de gravité sont alors de l'ordre de 53,5 mm4 et 3,8 mm4 respectivement. Ici mm4 signifie millimètre à la puissance 4. Dans ce cas on a donc bien un rapport grand. Ces dimensions peuvent varier dans une fourchette de plus ou moins 10%. Ces dimensions varient aussi en fonction de la nature du scanner à plat. On considère dans notre exemple un scanner à plat grand public pouvant scanner un document de format A4, avec des vitesses de déplacement de capteur faible. Dans le cas d'un scanner plus industriel, donc plus rapide, il faut envisager des dimensions supérieures permettant d'adapter le dispositif de tension de courroie à la puissance du moteur utiliser pour mouvoir le capteur optique. Le matériau utilisé est de préférence de l'ABS dont le module de Young, sensiblement égal à 2100 N/mm, assure au bras, compte tenu des moments d'inertie ci-dessus, des caractéristiques mécaniques satisfaisantes pour un scanner à plat grand publique. D'autre matériau, notamment parmi les plastics, sont bien sur envisageables.

Le bras 201 est fixé par une première extrémité 202 au reste de la coque 107. Cette fixation est obtenue lors du moulage de la coque 107, le bras 201 faisant partie intégrante de la coque. A partir de l'extrémité 202, le bras 201 s'étend dans une direction perpendiculaire à la direction 108 de translation.

Le bras 201 comporte, à son extrémité 203 opposée à l'extrémité 202 un plateau 204 horizontal. Le plateau 204 est solidaire du bras 201 car le plateau 204 est lui aussi moulé en même temps que la coque 107. Le plateau 204 est fixé sur la partie inférieure du bras 201 et dans le prolongement de ce bras. Le plateau 204 comporte en son centre un axe 205 vertical moulé en même temps que le plateau 204. Les extrémités 202, 203, et le centre de l'axe 205 sont alignés. Un droite passant par le centre de l'axe 205 et s'étendant dans la direction 108 de translation passe aussi par le centre de la poulie 105.

D'une manière générale, à partir de l'extrémité 202, le bras 201 s'étend au-dessus du fond de la coque 107, ce fond étant horizontal. Cela permet au bras 101 de ployer dans un plan horizontal. De part sa géométrie, le bras 201 n'est pas flexible dans des plans non horizontaux. Cela garantit un positionnement et une orientation correcte de l'axe 205 destiné à recevoir la poulie 106 qui de fait tourne autour de cet axe 205. Dans une variante préférée, l'axe 205 est donc cylindrique de manière à favoriser la rotation de la poulie 106 autour de cet axe.

La figure 2b est une vue latérale de l'extrémité 203 et du plateau 204.
La figure 2b illustre le fait que, lorsque la poulie 106 est en place sur l'axe 201, le centre de la bande de roulement de la poulie 106 est situé à mi-hauteur de la dimension verticale du bras 201. Ce positionnement assure que lorsque la courroie 104 exerce une tension sur le bras 201 celui ci ne subit qu'une flexion dans le plan de la tension et n'est soumis à aucune torsion autour d'un axe qui s'étendrait colinéairement au bras 201.

La figure 2a illustre aussi le fait que, dans une variante, la coque 107 comporte, entre le bras 201 et la poulie 105 un deuxième axe 206 vertical. A proximité immédiate de cet axe 206, la coque comporte aussi une paroi 207 verticale d'appui. L'axe 206 et la paroi 207 permettent la mise en place d'un ressort 300 en épingle.

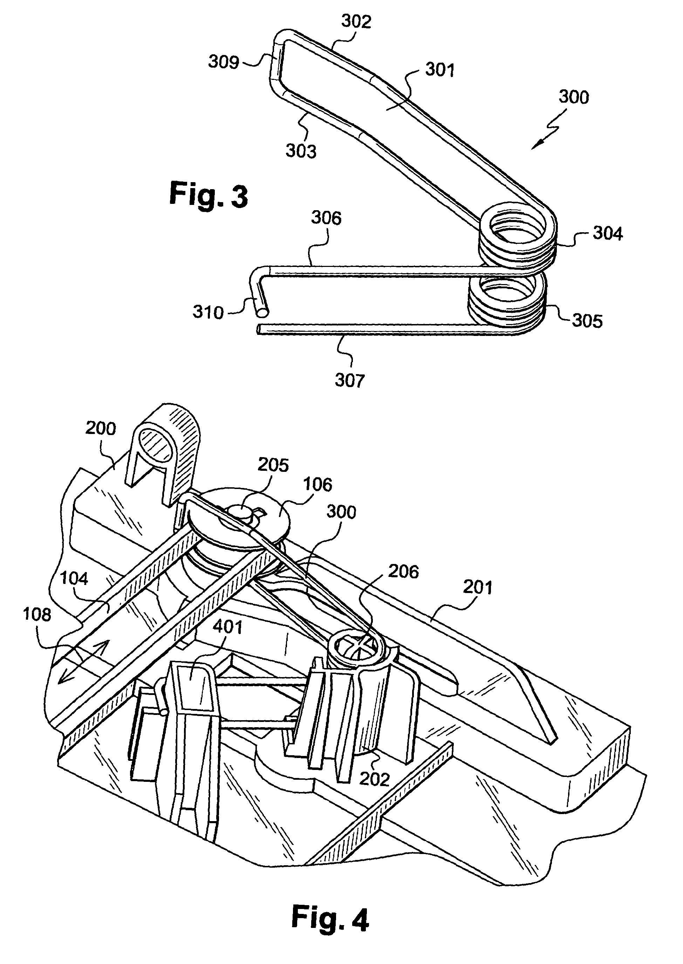

La figure 3 montre une structure possible pour le ressort 300. Le ressort 300 comporte une boucle 301 allongée comportant principalement deux branches 302 et 303 parallèles. Les branches 302 et 303 s'étendent, lorsque le ressort 300 est en place, dans des plans horizontaux. Les branches 302 et 303 sont reliées par l'une de leur extrémité via une section 309. Chacune des branches 302, respectivement 303, sont poursuivies par un enroulement 304, respectivement 305, de spires jointives. Les enroulements 304 et 305 sont coaxiaux Les enroulements 304, respectivement 305, sont à leur tour poursuivis par des bras rectilignes 306, respectivement 307. Lorsque le ressort 300 est en place sur le dispositif 200, les enroulements 304 et 305 enserrent l'axe 206, les bras 306 et 307 sont en appui sur la paroi 207, et les bras 302 et 303 sont en appui sur l'axe 205. De manière à assurer un bon maintient de ressort 300, tout en économisant la matière, l'axe 206 a, dans une variante préférée, une section cruciforme à 4 branches orthogonales. Le haut de l'axe 206 et de la paroi 207 correspond au haut de l'axe 205.

Dans une variante préférée, les bras 302 et 303 sont coudés de telle sorte que les extrémités de ces bras en contact avec l'axe 205 soient perpendiculaires à la direction 108 de translation. Cela permet d'équilibrer l'action du ressort 300 sur le bras 201 par rapport aux efforts exercés par la courroie 104 sur le bras 201.

La figure 2b montre que l'axe 205 s'étend aussi sous le plateau 204 de manière à fournir un point d'appui à la branche 303 du ressort 300.

La figure 4 montre un scanner selon l'invention avec le dispositif de tension de courroie complètement monté. La figure 4 montre que l'action du ressort 300 sur l'axe 205 s'oppose à l'action que la courroie 104 exerce sur l'axe 205 via la poulie 106. L'action du ressort maintient donc la courroie 104 en tension.

Dans une variante sans ressort, c'est la seule élasticité du bras 201 qui s'oppose à l'action de la courroie 104 sur l'axe 205. Cette élasticité permet de maintenir la courroie 204 en tension.

La figure 4 montre aussi que les branches 302 et 303 du ressort 300 sont situées de part et d'autre de la poulie 106, ce qui a pour effet de limiter les déplacements verticaux de la poulie 106, notamment en cas de choc sur le scanner 100. Ce maintient est renforcé par le fait que la branche 303 a un point d'appui situé sous le plateau 204, ce qui empêche le ressort 300 de monter, alors que la poulie 106 empêche le même ressort de descendre. La poulie 106, et la courroie 104 passent alors à travers la boucle formée par les branches 302, 303 et la section 309 du ressort 300. Grâce à ce montage le bras, la poulie et le ressort forment un ensemble qui se verrouille une fois en place. Le ressort emprisonne la poulie sur le bras. La poulie et le bras garantissent la position de la boucle du ressort. Ici, par verrouiller, on entend garantir un positionnement constant dans le temps.

La figure 4 montre aussi une deuxième paroi 401 coopérant avec les bras 306 et 307 du ressort 300. Ces bras prennent appui sur la paroi 401 lorsque le ressort 300 est en place sur l'axe 206. Dans cette variante, le bras 306 comporte à son extrémité opposée à l'enroulement 304 une section 310 formant un angle droit avec le bras 306. La section 310 coopère avec la paroi 401 pour le maintien en place du ressort 300.

Dans la pratique les paroi 207 et 401 sont verticales et renforcées par des parois de renforts elles aussi verticales mais perpendiculaires aux parois 207, respectivement 401. Les parois de renforts sont situées sur les faces des parois 207, respectivement 401, opposée aux faces des parois 207, respectivement 401, en contact avec le ressort 300.

La solution selon l'invention porte le nombre de pièces amovibles d'un dispositif de tenseur de courroie à zéro, ou au maximum à un dans la variante avec le ressort 300. Cela simplifie grandement le montage d'un tel scanner tout en limitant les points d'usures. De plus la solution selon l'invention est aisément réalisable car le moule de la coque du scanner comportant le dispositif tenseur de courroie ne présente aucune difficulté de réalisation.

Dans une variante de l'invention le dispositif 200 comporte un deuxième bras flexible symétrique au bras 201 flexible selon l'axe 205. Dans cette variante le dispositif 200 est donc solidaire de la coque 107 par deux points symétriques par rapport à l'axe 205. Cette variante confère aux bras flexibles une plus grande raideur, les rendant plus apte à fonctionner sans l'assistance d'un ressort, et/ou diminuant les contraintes de fabrication par rapport à l'utilisation d'un bras unique.

## Revendications

1. Dispositif scanner (100) à plat comportant une courroie (104) d'entraînement pour déplacer un chariot (102) mobile sur lequel est fixé un capteur (101) optique du scanner explorant les documents à scanner, le scanner comportant aussi un dispositif (200) tendeur de courroie, **caractérisé en ce que** :
- le dispositif tendeur comporte un bras (201) flexible, moulé intégralement dans la coque du scanner,
- le bras flexible est flexible dans le plan horizontal dans lequel se déplace le chariot mobile, le moment d'inertie d'une section droite du bras par rapport à un axe horizontal étant supérieur au moment d'inertie de ladite section par rapport à une axe vertical,
- le bras flexible supporte, à son extrémité non solidaire de la coque, une poulie (106) sur laquelle est engagée la courroie d'entraînement.

2. Dispositif selon la revendication 1, **caractérisé en ce que** le bras flexible comporte, à son extrémité non solidaire de la coque, un plateau (204) horizontal comportant un premier axe (205) vertical apte à coopérer avec la poulie (106).

3. Dispositif selon l'une des revendications 1 ou 2, **caractérisé en ce que** le bras flexible, au repos, s'étend dans une direction perpendiculaire à une direction de déplacement du chariot mobile.

4. Dispositif selon l'une quelconques des revendications 1 à 3 précédentes, **caractérisé en ce que** par son élasticité, le bras flexible maintient la courroie d'entraînement en tension.

5. Dispositif selon l'une quelconques des revendications 1 à 3 précédente, **caractérisé en ce que** la coque comporte des moyens (206, 207), moulés dans la coque du scanner, pour la mise en place d'un ressort (300) apte à coopérer avec la bras flexible pour la tension de la courroie d'entraînement.

6. Dispositif selon la revendication 5, **caractérisé en ce que** les moyens pour la mise en place du ressort comportent un deuxième axe (206) vertical et une paroi (207) verticale d'appui, le ressort étant mobile en rotation autour du deuxième axe et étant en compression entre la paroi d'appui et le bras flexible.

7. Dispositif selon la revendication 6, **caractérisé en ce que** le ressort est un ressort en épingle comportant une boucle en appui contre le bras flexible, des enroulements s'enroulant autour du deuxième axe, et des bras s'appuyant contre la paroi d'appui.

8. Dispositif selon la revendication 7, **caractérisé en ce que** la boucle du ressort comporte 2 branches parallèles s'étendant dans des plans horizontaux, les deux branches étant coudées de telle sorte que les branches sont tangentes au premier axe dans un plan perpendiculaire à une direction de déplacement du chariot.

9. Dispositif selon l'une des revendications 7 ou 8, **caractérisé en ce que** la boucle du ressort comporte 2 branches parallèles s'étendant dans des plans horizontaux, les deux branches s'appuyant sur le bras flexible, et passant de part et d'autre de la courroie engagée sur la poulie placée sur le premier axe, la courroie passant alors à travers la boucle du ressort, le bras, la poulie et le ressort formant alors un système verrouillé.

10. Dispositif selon l'une quelconques des revendications 1 à 9 précédente, **caractérisé en ce** le dispositif tendeur comporte un deuxième bras symétrique au premier par rapport au premier axe.

## Claims

1. Flatbed scanner device (10) comprising a driving belt for moving a mobile carriage (102) on which is fixed an optical scanner sensor (101) analyzing documents to be scanned, the scanner also comprising a belt tensioning device (200), **characterized in that**:
- the tensioning device comprises a flexible arm (201), entirely molded in the scanner body,
- the flexible arm is flexible in a horizontal plane in which moves the mobile carriage, the moment of inertia of a straight section of the arm relative to a horizontal axis being superior to the moment of inertia of said section relative to a vertical axis,
- the flexible arm supports, at its extremity which is not fixed to the body, a pulley (106) on which the driving belt is engaged.

2. Device according to claim 1, **characterized in that** the flexible arm comprises, at its extremity which is not fixed to the body, a horizontal plate (204) comprising a first vertical axis (205) able to cooperate with the pulley (106).

3. Device according to any one of the claims 1 or 2, **characterized in that** the flexible arm extends, at rest, in a direction perpendicular to a direction of movement of the mobile carriage.

4. Device according to any one of the preceding claims 1 to 3, **characterized in that** due to its elasticity the flexible arm holds the driving belt under tension.

5. Device according to any one the preceding claims 1 to 3, **characterized in that** the body comprises means (206, 207), molded in the scanner body, for placing a spring (300) able to cooperate with the flexible arm for tensioning the driving belt.

6. Device according to claim 5, **characterized in that** the means for placing the spring comprise a second vertical axis (206) and a vertical bearing wall, the spring being mobile in rotation around the second axis and being in a compression state between the bearing wall and the flexible arm.

7. Device according to claim 6, **characterized in that** the spring is a kickover spring comprising a loop bearing against the flexible arm, coils winding around the second axis, and arms bearing against the bearing wall.

8. Device according to claim 7, **characterized in that** the spring loop comprises two parallel branches, both branches being bent in such a manner that the branches are tangent to the first axis in a plane perpendicular to a direction of movement of the carriage.

9. Device according to any one of the claims 7 or 8 **characterized in that** the spring loop comprises two parallel branches extending in horizontal planes, both branches bearing on the flexible arm, and extending on either side of the belt engaged on the pulley placed on the first axis, the pulley extending then through the spring loop, the arm, the pulley and the spring forming then a locked system.

10. Device according to any one of the preceding claims 1 to 9, **characterized in that** the tensioning device comprises a second arm symmetrical to the first arm relative to the first axis.

## Patentansprüche

1. Flachbettscannervorrichtung (100), umfassend einen Treibriemen (104) zum Bewegen eines beweglichen Schlittens (102), auf welchen ein optischer Scannersensor befestigt ist, welcher zu scannende Dokumente abtastet, wobei der Scanner auch eine Riemenspannervorrichtung (200) umfasst, **dadurch gekennzeichnet, dass**
- die Spannervorrichtung einen flexiblen Arm (201) umfasst, der vollständig im Scannerkörper geformt ist,
- der biegsame Arm biegsam in der horizontalen Ebene ist, in welcher sich der bewegliche Schlitten bewegt, wobei das Trägheitsmoment eines geraden Armabschnitts bezogen auf eine horizontale Achse größer als das Trägheitsmoment des genannten Abschnitts bezogen auf eine vertikale Achse ist,
- der biegsame Arm an seinem am Körper nicht befestigten Ende eine Rolle (106) abstützt, mit welcher der Treibriemen in Eingriff ist.

2. Vorrichtung nach Anspruch 1, **dadurch gekennzeichnet, dass** der biegsame Arm an seinem am Körper nicht befestigten Ende eine horizontale Platte (204) umfasst, welche eine erste vertikale, für die Zusammenwirkung mit der Rolle (106) geeignete Achse (205) aufweist.

3. Vorrichtung nach einer der Ansprüche 1 oder 2, **dadurch gekennzeichnet, dass** sich der biegsame Arm in Ruhe in eine zur Bewegungsrichtung des beweglichen Schlittens senkrechte Richtung erstreckt.

4. Vorrichtung nach einer der vorhergehenden Ansprüche 1 oder 3, **dadurch gekennzeichnet, dass** der biegsame Arm wegen seiner Elastizität den Treibriemen unter Spannung haltet.

5. Vorrichtung nach einer der vorhergehenden Ansprüche 1 bis 3, **dadurch gekennzeichnet, dass** der Körper im Körperscanner geformte Mittel (206, 207) zum Aufstellen einer Feder (300) umfasst, welche für die Zusammenwirkung mit dem biegsamen Arm zum Spannen des Treibriemens geeignet ist.

6. Vorrichtung nach Anspruch 5, **dadurch gekennzeichnet, dass** die Mittel zum Aufstellen der Feder eine zweite vertikale Achse (206) und eine vertikale Abstützwand (207) umfassen, wobei die Feder um die zweite Achse drehbeweglich ist, und zwischen Abstützwand und biegsamer Wand zusammengedrückt ist.

7. Vorrichtung nach Anspruch 6, **dadurch gekennzeichnet, dass** die Feder eine Schnappfeder ist, welche eine am biegsamen Arm abstützte Schleife umfasst, wobei sich Wicklungen um die zweite Achse herumwickeln, und wobei sich Arme an der Abstützwand abstützen.

8. Vorrichtung nach Anspruch 7, **dadurch gekennzeichnet, dass** die Federschleife zwei parallele Schenkel umfasst, welche in horizontalen Ebenen sich erstrecken, wobei die beide Schenkel so gekrümmt sind, dass die Schenkel die erste Achse in einer zu einer Bewegungsrichtung des Schlittens senkrechten Ebene berühren.

9. Vorrichtung nach einer der Ansprüche 7 oder 8, **dadurch gekennzeichnet, dass** die Federschleife zwei parallele Schenkel umfasst, welche in horizontalen Ebenen sich erstrecken, wobei sich die beide Schenkel am biegsamen Arm abstützen, und zu beiden Seiten des im Eingriff mit der Rolle auf der ersten Achse befindlichen Riemens erstrecken, wobei sich der Riemen dann durch die Federschleife erstreckt, und wobei der Arm, die Schleife und die Feder dann ein verriegeltes System bilden.

10. Vorrichtung nach einer der Ansprüche 1 bis 9, **dadurch gekennzeichnet, dass** die Spannervorrichtung einen zweiten Arm umfasst, welcher symmetrisch zum ersten Arm bezogen auf die erste Achse angeordnet ist.
